# EUROPEAN PATENT SPECIFICATION

(11) **EP 1 054 178 B1**
(45) Date of publication and mention of the grant of the patent: **17.08.2005**
(21) Application number: 00116732.9
(22) Date of filing: 06.10.1995
(51) Int. Cl.: F16D 41/07, F16C 33/12

(54) **End bearing for one-way clutch**
Endlager für eine Freilaufkupplung
Palier de bout pour embrayage à roue libre

(43) Date of publication of application: 22.11.2000
(62) Divisional of application: 95933630.6
(73) Proprietor: TAIHO KOGYO CO., LTD., Aichi 471-8671 (JP); Koyo Seiko Co., Ltd., Osaka-shi, Osaka 542 (JP)
(72) Inventor: Sato, Eichi, Toyota-shi, Aichi 471 (JP); Kaku, Yoshihiro, Toyota-shi, Aichi 471 (JP); Yokota, Yuji, Toyota-shi, Aichi 471 (JP); Shibata, Hiroshi, Toyota-shi, Aichi 471 (JP); Hatanaka, Masanori, Toyota-shi, Aichi 471 (JP); Sugiyama, Eiji, Toyota-shi, Aichi 471 (JP); Sonoda, Jun, Toyota-shi, Aichi 471 (JP); Numata, Tetsuaki, c/o Koyo Seiko Co Ltd, Osaka-Shi, Osaka 542 (JP)
(74) Representative: Carter, Stephen John

(56) References cited:
- DE-A- 3 621 577
- GB-A- 930 283
- GB-A- 2 285 290
- PATENT ABSTRACTS OF JAPAN vol. 011, no. 327 (M-635), 24 October 1987 (1987-10-24) & JP 62 110021 A (TAIHO KOGYO CO LTD), 21 May 1987 (1987-05-21)

## Description

This application is a divisional of application No. 95933630.6.

The invention relates to an end bearing for one-way clutch, and more particularly, to an end bearing for one-way clutch which is preferred for use in an automatic transmission, for example.

A one-way clutch is known in the art comprising an annular inner race which is disposed radially inward, an annular outer race disposed in surrounding relationship with the inner race, a plurality of sprags slidably interposed between the inner and the outer race, a retainer for retaining the sprags, ribbon springs for urging the sprags against the track surface of the both races, and an annular end bearing slidably interposed between the peripheral surfaces of the both races at locations axially outside the retainer for supporting a radial load acting upon the both races.

An end bearing for one-way clutch of the prior art can be categorised into 4 types. In a first implementation, the end bearing is shaped from phosphor bronze sheet by a press operation. In a second implementation, the end bearing is shaped by a press operation of an integral sheet-like material which results from sintering an iron sheet and powder of phosphor bronze. In a third implementation, the end bearing is formed by cutting a high-tensile brass to shape. In a fourth implementation, a steel block is machined by a cutting operation, followed by a quenching, a tempering and a grinding operation, and finally a manganate phosphate film is applied to the surface thereof.

However, conventional end bearings mentioned above suffered from individual drawbacks. Specifically, an end bearing according to the first implementation exhibits a reduced rigidity, which causes an increased degree of elastic deformation when the magnitude of the radial load increases, which in turn results in a degraded functioning or sometimes a failure of the entire one-way clutch. An end bearing according to the second implementation undergoes a reduced amount of elastic deformation as compared with the first implementation, but because the iron sheet is tempered during the sintering step, there may be caused a reduction in the strength of the end bearing, which may be subject to a plastic deformation. An end bearing according to the third implementation requires an increased cost because of a high material cost. In an end bearing according to the fourth implementation, a required rigidity can be secured, but the manganate phosphate film which is formed on the surface thereof presents a poor affinity and self-lubrication capability. Accordingly, in order to secure a satisfactory anti-seizure resistance, a high dimensional accuracy is required during the manufacture, resulting in an increased cost of the entire one-way clutch.

The Applicant has previously proposed an improvement of such an end bearing in Japanese Patent Application No.212,989/93 in which a Pb plating is applied to the surface of the steel sheet, but there still remains a need to improve the durability for use over a prolonged period of time or under severe conditions of use.

GB-A-2285290 on which the preamble of claim 1 is based describes an end bearing for a one-way clutch. A steel body of the bearing is coated with a copper alloy layer which in turn is coated with a tin layer.

GB-930283A discloses a plain bearing for a shaft incorporating an antifriction sleeve having a steel core provided with antifriction metal on its inner and outer faces.

JP62-110021 discloses a bearing surface having two soft coating layers, the innermost one of which is an Sn alloy.

The present invention sets forth an end bearing for a one-way clutch according to claim 1.

With the construction of the invention, the use of the iron material for the body allows a sufficient rigidity to withstand the radial load acting on the end bearing to be secured. Since the surface of the end bearing which is disposed for sliding contact comprises the soft coating, the affinity of the end bearing with the inner and the outer race as it is disposed for sliding contact therewith is improved, thus providing an end bearing having an improved anti-seizure resistance and durability.

The interposition of the hard coating between the body and the soft coating is effective to prevent a sliding contact with the steel sheet which exhibits a poor sliding response in the event the soft coating, which provides the sliding surface, becomes abraded, but the hard coating prevents an abrasion of the body from occurring, thus improving the anti-seizure resistance. Depending on a combination of the hard and the soft coating, it is possible to promote a diffusion reaction of the hard and the soft coating into each other, thus improving the close adherence between the both coatings and also improving the sliding response of the hard coating. In this manner, there is provided a one-way clutch which exhibits an improved anti-seizure resistance and durability as compared with the prior art.

Exemplary embodiments of the invention will be described in greater detail with reference to the accompanying drawings of which:
Fig.1 is a cross section of part of a one-way clutch having an end bearing embobying the invention located above a centreline thereof;
Fig.2 is a cross section taken along the line II-II shown in Fig.1;
Fig.3 is an enlarged section of an end bearing part, outside the scope of the invention;
Fig.4 is a cross section of a hard coating outside the scope of the invention;
Fig.5 is a cross section of a hard coating outside the scope of the invention;
Fig.6 is a cross section of a hard coating outside the scope of the invention;
Fig.7 is a cross section of a hard coating outside the scope of the invention;
Fig.8 is a cross section of an embodiment that is outside the scope of the invention;
Fig.9 is a cross section of an embodiment of the invention;
Fig.10 is a cross section illustrating an arrangement used in a durability test.

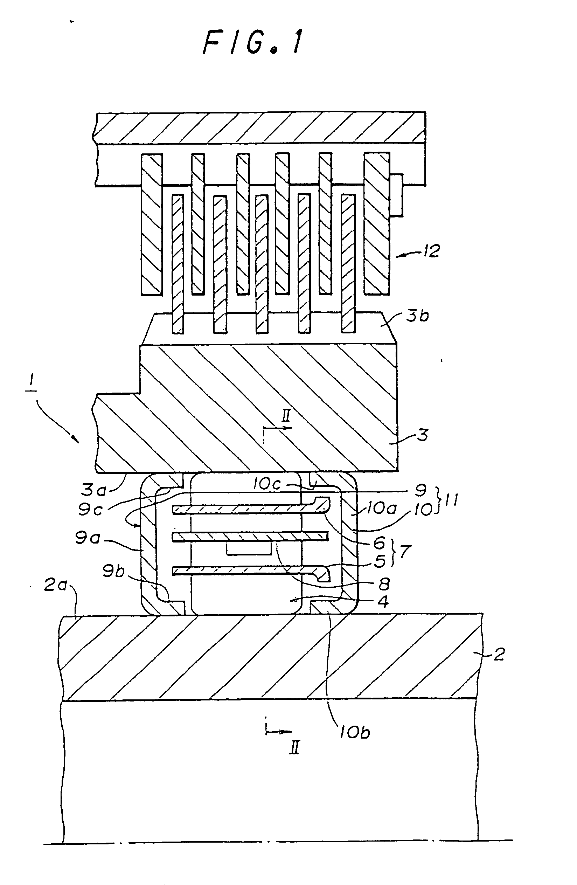

Referring to the drawings, several embodiments that are outside the scope of the invention will now be described for illustrative purposes only. Fig.1 shows an essential part of an automatic transmission for automobile in cross section.

The one-way clutch 1 comprises an inner race 2 having an annular track surface 2a, an outer race 3 having an annular track surface 3a, a plurality of sprags 4 disposed between the both races 2,3 for engagement with the both track surfaces 2a, 3a to transmit a torque, a retainer 7 including a pair of inner and outer annular members 5,6 which maintain the sprags 4 at an equal circumferential spacing therebetween, ribbon springs 8 disposed between the both annular members 5,6 to apply a moment to the sprags 4 in a direction to engage or mesh with the both track surfaces 2a, 3a, and an end bearing 11 including a pair of annular members 9, 10 according to the invention which are disposed at locations adjacent to the axial ends of the retainer 7.

The inner race 2 rotates together with a rotary shaft, not shown, while the outer race 3 engages with a friction plate assembly 12, known in the art, through a plurality of axial grooves 3b.

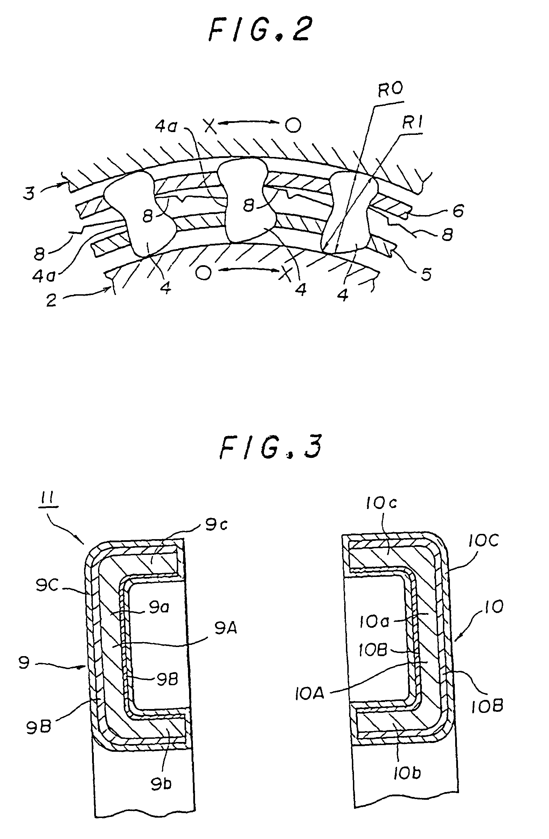

Each sprag 4 has a dimension R1 which is chosen to be greater than a dimension R0 as shown in Fig.2, and is formed with recesses 4a on the both sides. The ribbon spring 8 is disposed across opposing recesses 4a of adjacent sprags 4 to apply a counter-clockwise acing moment to the sprags 4, as viewed in Fig.2. In this manner, each sprag 4 cannot rotate in the counter-clockwise direction, as viewed in Fig.2, but is slightly rotate in the clockwise direction. Accordingly, when the inner race 2 tends to rotate counter-clockwise relative to the outer race 3, the inner race 2 slides with respect to the individual sprags 4, and can thus freely rotatable in the counter-clockwise direction, whereby a torque cannot be transmitted from the inner race 2 to the outer race 3. Conversely, when the inner race 2 tends to rotate clockwise relative to the outer race3, the inner race 2 engages or meshes with the individual sprags 4, which simultaneously engage or mesh with the outer race 3, thus transmitting a torque from the inner race 2 to the outer race 3 and allowing the one-way clutch 1 to rotate integrally in the clockwise direction.

The annular members 9, 10 which constitute the end bearing 11 comprise radially extending annular portions 9a, 10a, as well as tubular portions 9b, 10b extending axially from the inner periphery of the annular portions around the inner periphery, and tubular portions 9c, 10c axially extending from the outer periphery of the annular portions around the outer periphery. Thus, the annular members 9, 10 are channel-shaped in section. The axially left end of the retainer 7 is positioned between the tubular portion 9b extending around the inner periphery and the tubular portion 9c extending around the outer periphery of the left-hand annular member 9 while the axially right end of the retainer 7 is positioned between the tubular portion 10b extending around the inner periphery and the tubular portion 10c extending around the outer periphery of the right-hand annular member 10.

Under this condition, the inner peripheral surfaces (or sliding surfaces) of the both tubular portions 9b, 10b extending around the inner periphery of the both annular members 9, 10 are disposed for sliding contact with the outer peripheral surface of the inner race 2 while simultaneously the outer peripheral surfaces (or sliding surfaces) of the tubular portions 9c, 10c extending around the outer periphery of the both annular members 9, 10 are disposed for sliding contact with the inner peripheral surface of the outer race 3. When such arrangement is achieved in the end bearing 11, an alignment between the axes of the both races 2, 3 can be achieved, thus supporting the both races 2, 3 in the radial direction.

The end bearing of the invention is constructed in a manner discussed below with reference to Fig.1 to improve the bearing performance.

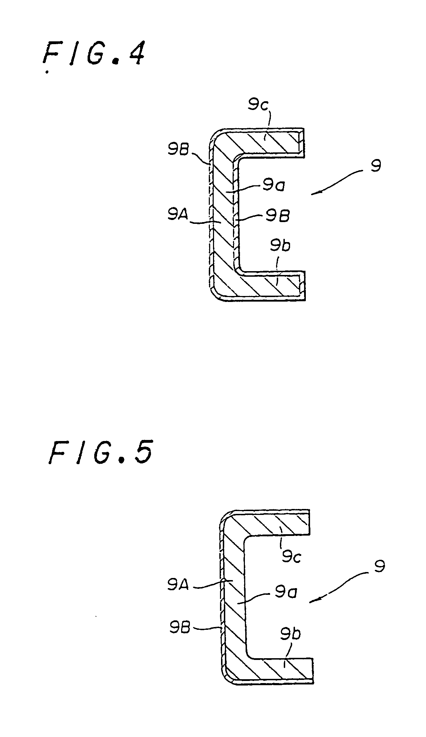

First, however, the end bearing of Fig.3 will be described which is not an embodiment of the present invention but which helps with an understanding of the invention.

Specifically, the respective annular members 9, 10 which constitute together the end bearing 11 comprise annular bodies 9A, 10A which are channel-shaped in section, hard coatings 9B, 10B defined by a hard plating formed over the entire surface of the tubular portions 9b, 10b extending around the inner periphery and the tubular portions 9c, 10c extending around the outer periphery of the bodies 9A, 10A except for the end faces thereof, and soft coatings 9C, 10C defined by a soft plating applied to the entire surface of the hard coatings 9B, 10B inclusive of the end faces.

A process of manufacturing the end bearing 11 will be described. Initially a steel sheet having a thickness of 1mm and hardness of Hv100 to 180 and having a Cu (copper) plating applied to a thickness of 8 µm on the front surface and to a thickness of 1 µm on the rear surface is provided. The steel sheet is stamped by a press operation into a channel-shaped cross section so that the Cu plating applied to the thickness of 8 µm represents the outer surface. In this manner, the bodies 9A, 10A which comprise a steel sheet, and the hard coatings 9B, 10B which comprise Cu plating are simultaneously formed.

The term "outer surface" of the end bearing 11 as used herein is intended to refer generically to the sliding surfaces (or inner peripheral surfaces) of the tubular portions 9b, 10b extending around the inner periphery, the sliding surfaces (outer peripheral surfaces) of the tubular portions 9c, 10c extending around the outer periphery and one of the surfaces of the annular portions 9a, 10a which join these tubular portions. Similarly, the term "inner surface" of the end bearing 11 is intended to refer generically to the outer peripheral surfaces of the tubular portions 9b, 10b extending around the inner periphery, the inner peripheral surfaces of the tubular portions 9c, 10c extending around the outer periphery and the other surface of the annular portions 9a, 10a which join between these tubular portions.

Continuing the description of the manufacturing process, the entire exposed surface is applied with an Sn (tin) plating to a thickness of 2 µm, which provides the soft coatings 9C, 10C. This completes the end bearing 11.

A heat treatment at a temperature from 160 to 250°C for a time interval of the order of one hour may be applied to the end bearing 11 on which the soft coatings 9C, 10C are formed. Such a heat treatment enables a diffusion of plating metals, which form the hard coatings 9B, 10B and the soft coatings 9C, 10C, into each other to be promoted. Specifically, Sn diffuses into Cu which provide the hard coatings 9B, 10B to form Cu-Sn layer, thus improving the sliding response of the hard coatings 9B, 10B. Since the temperature of the end bearing 11 rises to the order of the 120°C during the operation, such diffusion proceeds during the operation without applying a separate heat treatment during the manufacture.

A steel sheet which is previously formed with Cu plating on the front and the rear surface is provided, and is then stamped by a press operation to form the bodies 9A, 10A and the hard coatings 9B, 10B simultaneously. The application of the plating to the steel sheet improves the dimensional accuracy. However, alternatively, a steel sheet having no Cu plating applied to its front and rear surfaces may be provided, and is stamped by a press operation into channel-shaped cross section to form the bodies 9A, 10A. Subsequently, a Cu plating may be applied to only the outer surface of the bodies 9A, 10A to form the hard coatings 9B, 10B. It should be understood that Cu plating may be applied to the entire exposed surface of the bodies 9A, 10A. In place of the press operation a cutting operation may be used to machine the steel block to form the bodies 9A, 10A into the configuration mentioned above.

In place of Cu (copper), the material for the hard coatings 9B, 10B may comprise Ni (nickel), Ni-P (nickel-phosphorus), Ni-B (nickel-boron), Al (aluminium) or Zn (zinc). The thickness of the hard coatings 9B, 10B is preferably in a range from 0.5 µm to 50 µm, and more preferably, in a range from 1 µm to 30 µm.

In place of Sn, the material for the soft coatings 9C, 10C may comprise Pb-Sn (lead-tin), PB-Sn-Cu (lead-tin-copper), Pb-Sn-In (lead-tin-indium) or Sn alloy. The thickness of the soft coatings 9C, 10C is preferably in a range from 0.2 µm to 50 µm, and more preferably in a range from 0.5 µm to 30 µm.

Figs.4 to 7 illustrate different constructions of the hard coating 9B (10B). Figs. 4 to 7 illustrate constructions that are outside the scope of the invention.

Specifically, while the hard coatings 9B, 10B are not formed on the end faces of the tubular portion 9c (10c) extending around the outer periphery and the tubular portion 9b (10b) extending around the inner periphery in the embodiment shown in Fig 3, a hard coating 9B is formed on such end faces in an embodiment shown in Fig.4. In other words, the hard coating 9B is applied over the entire exposed surface of the body 9A.

In an embodiment shown in Fig.5, a hard coating 9B is applied to only the outer surface of the body 9A.

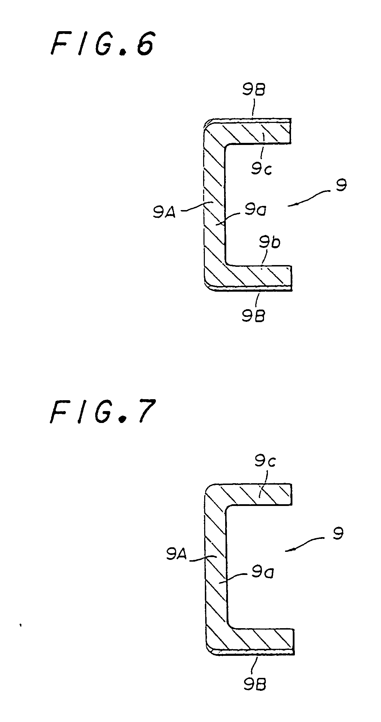

In an embodiment shown in Fig.6, a hard coating 9B is formed on only the sliding surface of the tubular portion 9c extending around the outer periphery and the sliding surface of the tubular portion 9b extending around the inner periphery of the body 9A.

In an embodiment shown in Fig.7, a hard coating 9B is formed on only the sliding surface of the tubular portion 9b extending around the inner periphery of the body 9A.

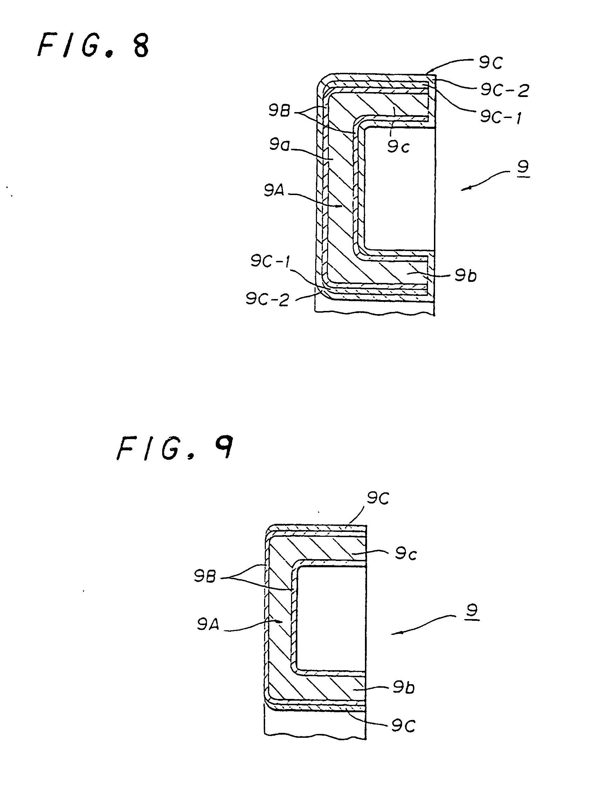

While not shown in Figs.4 to 7, it should be understood that a soft coating 9C, similar to that illustrated in Fig. 8 or 9, is applied to the inner and outer sliding surfaces of the annular member 9 shown in these Figures.

Figs. 8 and 9 show different constructions of the soft coating 9C (10C).

The construction of Fig. 8 is outside the scope of the invention. The embodiment of Fig. 9 is within the scope of the invention.

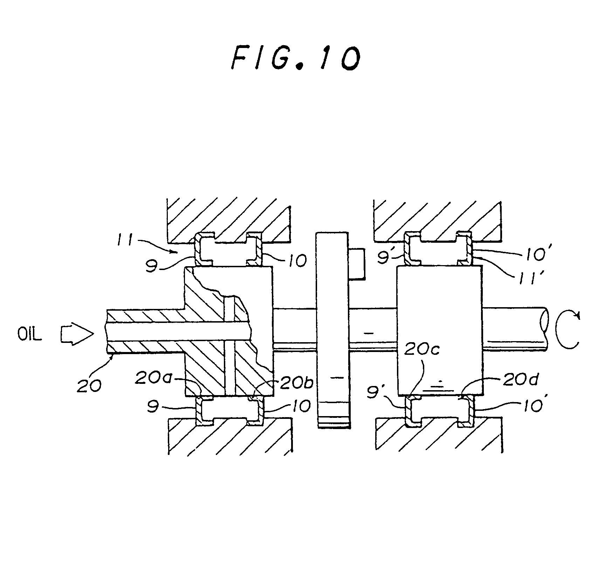

Specifically, in the embodiment shown in Fig.8, a soft coating 9C comprises two plated layers only in a region which corresponds to sliding surfaces on the inside and the outside. Specifically, when manufacturing an annular member 9 shown in Fig. 10, a Pb alloy plating, or specifically, a plating of Pb-Sn or Pb-Sn-Cu or Pb-Sn-In is applied to regions which correspond to the inner and the outer sliding surfaces after a hard coating 9B is formed on a body 9A, thus forming an inner or first plated layer 9C-1. Subsequently, an Sn or Sn alloy plating is applied to the entire exposed surface to form an outer or second plated layer 9C-2.

In the construction shown in Fig 8, the soft coating 9C is shown on the premise that the hard coating 9B similar to that shown in Fig.3 is used. However, the arrangement of the soft coating 9C shown in Fig.8 may be applied to individual hard coatings 9B shown in Figs.4 to 7 as a soft coating 9C thereon.

It should be understood that a combination of materials which are used in forming the hard coatings 9B, 10B and the soft coatings 9C, 10C mentioned above is not limited to those described above in connection with the embodiments, but that any combination may be chosen as desired.

Fig.9 illustrates an embodiment of the invention. Specifically, in the embodiment shown in Fig.9, the outer plated layer 9C-2 shown in Fig.8 is omitted. Accordingly, in the embodiment shown in Fig 9, there is only one layer of soft coating 9C formed only in a region which corresponds to both the inner and the outer sliding surfaces.

In Figs.4 to 9 only the left-hand annular member 9 which form the end bearing 11 has been shown in cross sections in order to simplify the description, but it should be understood that the right-hand annular member 10 is similarly constructed in a symmetrical manner with respect to the left-hand annular member 9. In addition, it is to be understood that the constructions of the individual embodiments may be used in any combination for the end bearings of the both sides. Alternatively, the construction according to the invention may be applied only to the end bearing of one side.

Table 1 given below indicates results of a durability test which is conducted on end bearings 11 according to individual embodiments of the invention, a conventional end bearing and other controls.

The test has been conducted on the basis of following conditions:
Testing machine: rotary load bushing journal testing machine
Testing conditions: As illustrated in Fig. 10, a pair of end bearings 11, 11', which are formed by each pair of annular members 9, 10 and 9', 10', respectively, are disposed in axial alignment, and the tubular portions extending around the outer periphery of the respective end bearings 11, 11' are fixed while the tubular portions extending around the inner periphery are disposed for sliding contact with a rotary shaft 20 during the test.

A lubricating oil having an oil temperature of 100°C is supplied to areas 20a, 20b, 20c, and 20d of sliding contact between the end bearings 11, 11', and the rotary shaft 20 at a rate of two litres per minute. The rotary shaft 20 is rotated at 4000 rpm, and during the rotation, a rotary load of about 3 kgf is applied to the respective end bearings 11, 11'.

The conventional product indicated in table 1 is an end bearing which is shaped by a press operation from an iron sheet on which powder of phosphor bronze is uniformly dispersed and then sintered at about 860°C. The conventional product exhibited a good durability, but showed a sign of seizure.

The control 1 comprises a body similar to one used in the present embodiment and to which an Ni-P plating is applied as a hard surface treatment. The control 1 exhibited a poor durability.

The control 2 comprises a body formed in the same manner as in the embodiment and having a surface which is coated by a manganate phosphate film. A seizure occurred with the control 2.

The control 3 comprises a body formed in the similar manner as in the present embodiments and having a surface to which a Pb-Sn-Cu plating is applied to a thickness of 30 µm. The control 3 exhibited a poor durability.

As will be noted from results of the test given in Table 1 the product according to the invention exhibited an excellent durability as compared with the conventional product and the controls 1,2,3.

As mentioned previously, the end bearing 11 of the invention employs a steel sheet to construct the bodies 9A, 10A, which allows sufficient rigidity to be secured which is capable of withstanding a radial load.

Since the sliding surfaces of the end bearing 11 is provided by the soft coatings 9C, 10C, a good affinity is achieved when the end bearing 11 is disposed for sliding contact with the track surfaces 2a, 3a of the inner race 2 and the outer race 3, thereby improving the anti-seizure resistance and durability.

The interposition of the hard coatings 9B, 10B between the bodies 9A, 10A and the soft coatings 9C, 10C is effective to prevent an abrasion of the bodies 9A, 10A by the presence of the hard coatings 9B, 10B in the event the soft coatings 9C, 10C, which provide the sliding surfaces, become abraded. In this manner the anti-seizure resistance can be improved.

As will be understood from results of the test shown in Table 1, there is provided a one-way clutch having an anti-seizure resistant and durability, both of which are improved in accordance with the invention as compared with the prior art.

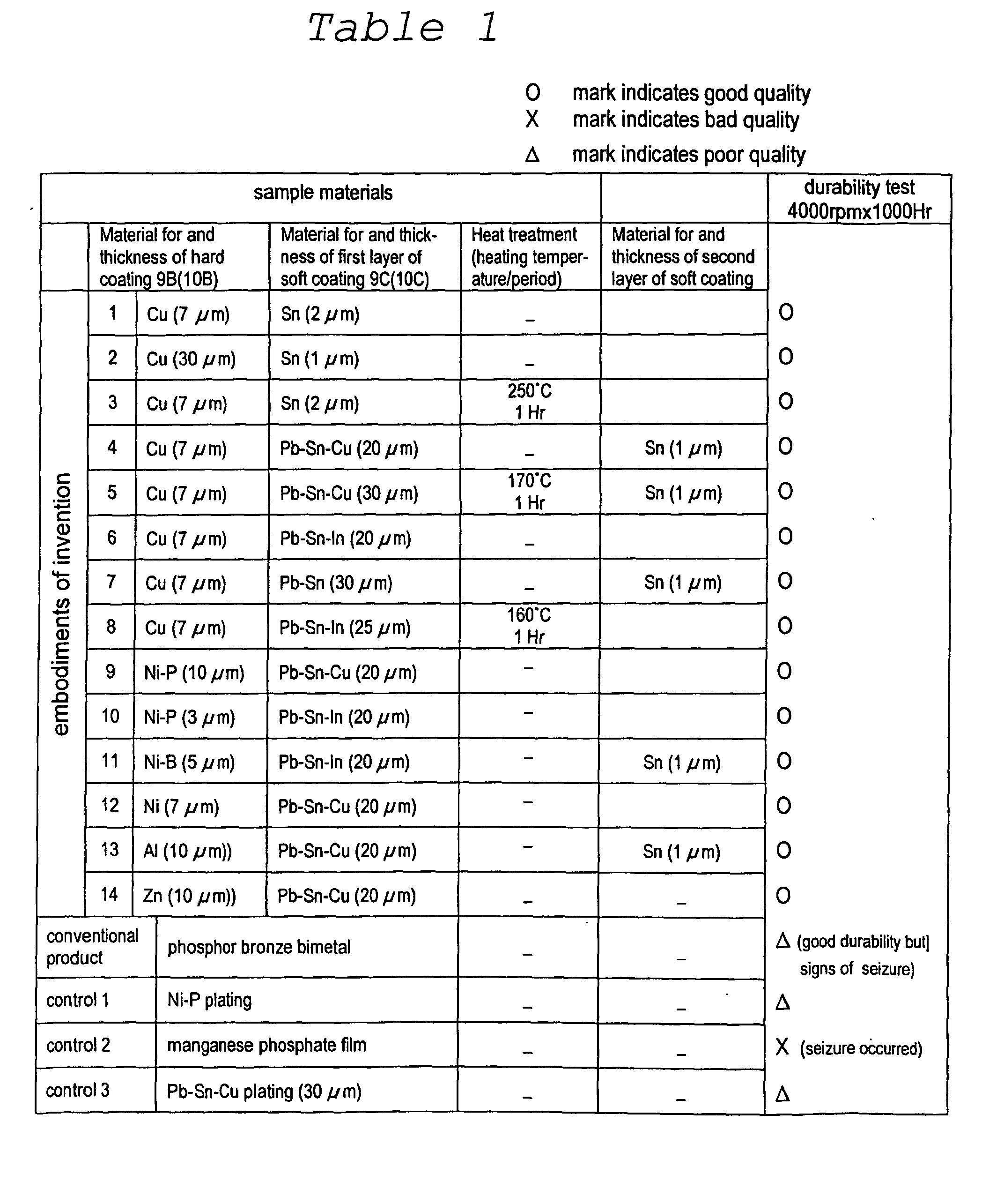

## Claims

1. An end bearing (11) for a one-way clutch including an annular inner race (2), an annular outer race (3) surrounding the inner race (2), a plurality of sprags (4) slidably interposed between the inner and the outer race (2, 3), a retainer (7) for retaining the sprags (4), and ribbon springs (8) for urging the sprags (4) against track surfaces (2a, 3a) of the both races (2, 3), in which the end bearing (11) is slidably interposed between the peripheral surfaces of the races (2, 3) at a location axially outside the retainer (7) for supporting a radial load acting on the races (2, 3);
the end bearing (11) comprising a body (9) formed of an iron material and including a tubular portion (9b) extending around the inner periphery, a tubular portion (9c) extending around the outer periphery of the end bearing (11), and an annular portion (9a) which joins the both tubular portions (9b, 9c), a hard coating (9B) defined by a hard plating formed on the surface of the body, and a soft coating (9C) defined by a soft plating formed on the surface of the hard coating,
**characterised in that** the soft coating (9C) is applied only to inner and outer sliding surfaces of the bearing.

2. An end bearing according to claim 1, wherein the soft coating (9C) comprises a Pb alloy.

3. An end bearing according to claim 2 in which the soft coating (9C) comprises one of Pb-Sn, Pb-Sn-Cu or Pb-Sn-In.

4. An end bearing according to any of the preceding claims in which the hard coating (9B) comprises one of Cu, Ni, Ni-P, Ni-B, Al or Zn.

5. An end bearing according to any one of the preceding claims in which the hard coating (9B) is formed on the surface of the body (9) except for the end faces of the tubular portions (9b, 9c) which extend around the inner and outer periphery of the end bearing (11).

6. An end bearing according to any one of the preceding claims in which the hard coating (9B) has a thickness in a range from 0.5µm to 50µm.

7. An end bearing according to any one of the preceding claims in which the hard coating (9B) comprises one of Cu, Ni and Zn, a thermal diffusion of a component of the soft coating (9C) into the hard coating (9B) occurring upon being heated.

8. An end bearing according to claim 11 in which the hard coating (9B) is subject to a heat treatment at a temperature from 160 to 250° for a time interval of the order of one hour.

9. An end bearing according to any one of the preceding claims in which the soft coating has a thickness in a range from 0.2µm to 50µm.

## Patentansprüche

1. Endlager (11) für eine Freilaufkupplung, umfassend einen inneren Laufring (2), einen äußeren Laufring (3), der den inneren Laufring (2) umgibt, eine Vielzahl von Klemmkörpern (4), die gleitbar zwischen dem inneren und dem äußeren Laufring (2, 3) angeordnet sind, einen Halter (7) zum Halten der Klemmkörper (4) und Formfedern (8) zum Drücken der Klemmkörper (4) gegen Laufflächen (2a, 3a) der beiden Laufringe (2, 3), worin das Endlager (11) an einer axial außerhalb des Halters (7) befindlichen Stelle zum Tragen einer auf die Laufringe (2, 3) wirkenden radialen Last gleitbar zwischen den Umfangsoberflächen der Laufringe (2, 3) angeordnet ist;
wobei das Endlager (11) einen aus einem Eisenmaterial ausgebildeten Körper (9) umfasst, der einen sich rund um den inneren Umfang herum erstreckenden röhrenförmigen Abschnitt (9b), einen sich rund um den äußeren Umfang des Endlagers (11) herum erstreckenden röhrenförmigen Abschnitt (9c) sowie einen die beiden röhrenförmigen Abschnitte (9b, 9c) verbindenden ringförmigen Abschnitt (9a), eine durch eine Hartplattierung definierte Hartbeschichtung (9B), die an der Oberfläche des Körpers ausgebildet ist, und eine durch eine Weichplattierung definierte Weichbeschichtung (9C), die an der Oberfläche der Hartbeschichtung ausgebildet ist, umfasst,
**dadurch gekennzeichnet, dass** die Weichbeschichtung (9C) ausschließlich an der inneren und der äußeren Gleitfläche des Lagers ausgebildet ist.

2. Endlager nach Anspruch 1, worin die Weichbeschichtung (9C) eine Pb-Legierung umfasst.

3. Endlager nach Anspruch 2, worin die Weichbeschichtung (9C) eines aus Pb-Sn, Pb-Sn-Cu oder Pb-Sn-In umfasst.

4. Endlager nach einem der vorangegangenen Ansprüche, worin die Hartbeschichtung (9B) eines aus Cu, Ni, Ni-P, Ni-B, Al oder Zn umfasst.

5. Endlager nach einem der vorangegangenen Ansprüche, worin die Hartbeschichtung (9B) an der Oberfläche des Körpers (9) unter Aussparung der Endflächen der ringförmigen Abschnitte (9b, 9c), die sich um den inneren und den äußeren Umfang des Endlagers (11) herum erstrecken, ausgebildet ist.

6. Endlager nach einem der vorangegangenen Ansprüche, worin die Hartbeschichtung (9B) eine Dicke in einem Bereich von 0,5 µm bis 50 µm aufweist.

7. Endlager nach einem der vorangegangenen Ansprüche, worin die Hartbeschichtung (9B) eines aus Cu, Ni und Zn umfasst, wobei bei Erwärmung eine Wärmediffusion einer Komponente der Weichbeschichtung (9C) in die Hartbeschichtung (9B) auftritt.

8. Endlager nach Anspruch 11, worin die Hartbeschichtung (9B) für einen Zeitraum in der Größenordnung einer Stunde einer Wärmebehandlung bei einer Temperatur von 160 bis 250 ° unterzogen wird.

9. Endlager nach einem der vorangegangenen Ansprüche, worin die Weichbeschichtung (9C) eine Dicke in einem Bereich von 0,2 µm bis 50 µm aufweist.

## Revendications

1. Palier de bout (11) pour un embrayage à roue libre incluant un chemin annulaire interne (2), un chemin annulaire externe (3) entourant le chemin interne (2), plusieurs sabots (4) interposés d'une manière coulissante entre les chemins interne et externe (2, 3), un organe de retenue (7) pour retenir les sabots (4), et des ressorts en ruban (8) pour solliciter les sabots (4) contre les surfaces de chemin (2a, 3a) des deux chemins (2, 3), où le palier de bout (11) est interposé d'une manière coulissante entre les surfaces périphériques des chemins (2, 3) à un emplacement axialement à l'extérieur de l'organe de retenue (7) pour supporter une charge radiale agissant sur les chemins (2, 3);
le palier de bout (11) comprenant un corps (9) constitué de matériau de fer et incluant une portion tubulaire (9b) s'étendant autour de la périphérie interne, une portion tubulaire (9c) s'étendant autour de la périphérie externe du palier de bout (11), et une portion annulaire (9a) qui relie les deux portions tubulaires (9b, 9c), un revêtement dur (9B) défini par un placage dur formé sur la surface du corps, et un revêtement mou (9C) défini par un placage mou formé sur la surface du revêtement dur,
**caractérisé en ce que** le revêtement mou (9C) est appliqué seulement aux surfaces de coulissement intérieure et extérieure du palier.

2. Palier de bout selon la revendication 1, où le revêtement mou (9C) comprend un alliage Pb.

3. Palier de bout selon la revendication 2, où le revêtement mou (9C) comprend l'un parmi Pb-Sn, Pb-Sn-Cu ou Pb-Sn-In.

4. Palier de bout selon l'une des revendications précédentes, où le revêtement dur (9B) comprend un parmi Cu, Ni, Ni-P, Ni-B, Al ou Zn.

5. Palier de bout selon l'une des revendications précédentes, où le revêtement dur (9B) est formé sur la surface du corps (9) à l'exception des faces d'extrémité des portions tubulaires (9b, 9c) qui s'étendent autour des périphéries intérieure et extérieure du palier de bout (11).

6. Palier de bout selon l'une des revendications précédentes, où le revêtement dur (9B) a une épaisseur dans une plage de 0,5 µm à 50 µm.

7. Palier de bout selon l'une des revendications précédentes, où le revêtement dur (9B) comprend l'un parmi Cu, Ni et Zn, une diffusion thermique d'un composant du revêtement mou (9C) dans le revêtement dur (9B) se produisant lors de l'échauffement.

8. Palier de bout selon la revendication 11, où le revêtement dur (9B) est soumis à un traitement thermique à une température de 160 à 250° pendant un intervalle de temps de l'ordre d'une heure.

9. Palier de bout selon l'une des revendications précédentes, où le revêtement mou a une épaisseur dans une plage de 0,2 µm à 50 µm.
